(19) Europäisches Patentamt
European Patent Office
Office européen des brevets

(11) **EP 3 471 955 B1**

(12) **EUROPEAN PATENT SPECIFICATION**

(45) Date of publication and mention
of the grant of the patent:
**05.07.2023 Bulletin 2023/27**

(21) Application number: **17734255.7**

(22) Date of filing: **14.06.2017**

(51) International Patent Classification (IPC):
**B32B 5/28** $^{(2006.01)}$      **B32B 3/12** $^{(2006.01)}$
**B32B 5/18** $^{(2006.01)}$

(52) Cooperative Patent Classification (CPC):
**C08G 18/225; B32B 3/12; B32B 5/022;**
**B32B 5/024; B32B 5/18; B32B 5/24; B32B 5/245;**
**B32B 15/14; B32B 27/12; B32B 29/02;**
**B32B 29/08; C08G 18/092; C08G 18/3206;**
**C08G 18/324; C08G 18/36;**      (Cont.)

(86) International application number:
**PCT/EP2017/064594**

(87) International publication number:
**WO 2017/216251 (21.12.2017 Gazette 2017/51)**

(54) **POLYURETHANE LAMINATED MOLDING ARTICLES AND PREPARATION METHOD THEREOF**

LAMINIERTE FORMARTIKEL AUS POLYURETHAN UND HERSTELLUNGSVERFAHREN DAFÜR

ARTICLES DE MOULAGE STRATIFIÉS DE POLYURÉTHANE ET PROCÉDÉ DE PRÉPARATION CORRESPONDANT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **17.06.2016 CN 201610463695**

(43) Date of publication of application:
**24.04.2019 Bulletin 2019/17**

(73) Proprietor: **Covestro Intellectual Property GmbH**
**& Co. KG**
**51373 Leverkusen (DE)**

(72) Inventors:
• **ZHU, Erika**
**Shanghai 200434 (CN)**
• **LI, Jun**
**Shanghai 200126 (CN)**

(74) Representative: **Levpat**
**c/o Covestro AG**
**Gebäude 4825**
**51365 Leverkusen (DE)**

(56) References cited:
**WO-A1-2012/015583      DE-U1- 29 900 621**

Remarks:
The file contains technical information submitted after the application was filed and not included in this specification

(52) Cooperative Patent Classification (CPC): (Cont.)
**C08G 18/4804; C08G 18/6696; C08G 18/7664;**
B32B 2250/02; B32B 2250/03; B32B 2250/40;
B32B 2260/021; B32B 2260/023; B32B 2260/046;
B32B 2262/0269; B32B 2262/06; B32B 2262/101;
B32B 2262/106; B32B 2262/14; B32B 2266/0278;
B32B 2605/00; B32B 2605/003; B32B 2605/08;
C08G 2101/00; C08G 2110/0083; C08G 2115/02

**Description**

**Technical Field**

This invention relates to a polyurethane laminated molding article, said polyurethane laminated molding article comprising a core layer and a reinforced fiber layer disposed on at least one side of said core layer, said reinforced fiber layer is formed by applying polyurethane resin composition on one or more layer(s) of reinforced fiber felt or reinforced fiber fabric and curing said polyurethane resin. This invention also relates to a method for preparing said polyurethane laminated molding article.

**Background**

Polyurethane laminated molding articles have been well known by persons skilled in the art.. Said polyurethane laminated molding articles can be obtained by disposing reinforced fiber felt or reinforced fiber fabric on one or both sides of a core layer (for example, paper honeycomb, aluminum honeycomb, foam core material, and so on), and applying polyurethane reaction mixture on the reinforced fiber felt or the reinforced fiber fabric, then placing the part covered with polyurethane reaction mixture in a mold, said part is laminated at a certain temperature to cure the polyurethane reaction mixture and form a three-dimensional structure, and demoulding.

The industry field has been looking for a method that can effectively improve the productivity and thereby reduce costs. The present polyurethane laminated products require the spraying of external mold release agent about every 10 times of demoulding. Moreover, due to the poor demoulding effect, the products will easily adhere to the mold, so the mold surface has to be cleaned every few hours. All these operations will suspend the normal production, thus reducing the productivity and increasing the costs. Therefore, there has always been a desire in the present field for providing a polyurethane laminated molding article having a good demoulding property.

An exemplary polyurethane laminated molding article is disclosed in WO 2012/015583 A1.

**Summary**

This invention provides a polyurethane laminated molding article, said polyurethane laminated molding article comprising a core layer and a reinforced fiber layer disposed on at least one side of said core layer, said reinforced fiber layer is formed by applying polyurethane resin composition on one or more layer(s) of reinforced fiber felt or reinforced fiber fabric and curing said polyurethane resin, wherein said polyurethane resin composition comprises:

A) an isocyanate component comprising one or more polyisocyanate(s);

B) an isocyanate reactive component comprising:

b1) a first polyol selected from polyols based on vegetable oil, or derivatives and modified products thereof, in a content of 5-50 wt.%, based on the weight of the isocyanate reactive component as 100 wt.%;

b2) a second polyol having an OH value of 300-700 mgKOH/g and a functionality of 2-6;

b3) one or more trimerization catalyst(s);

b4) an internal mold release agent in a content of 0.1-5 wt.%, based on the weight of the isocyanate reactive component as 100 wt.%.

In one embodiment of this invention, said first polyol is selected from polyols based on castor oil or soybean oil, or derivatives and modified products thereof.

In another embodiment of this invention, the isocyanate index of said polyurethane resin composition is 130-300.

In yet another embodiment of this invention, said trimerization catalyst is selected from amines or metal salts trimerization catalysts.

In still another embodiment of this invention, said core layer is selected from: thermoformable polyurethane foam, paper honeycomb, metal honeycomb, plastic honeycomb, or combinations thereof.

In still another embodiment of this invention, said reinforced fiber felt or reinforced fiber fabric is prepared from glass fiber, nature fiber, carbon fiber, aramid fiber, or combinations thereof.

This invention also provides a method for preparing a polyurethane laminated molding article, comprising:

i) providing a part to be laminated comprising a core layer and one or more layer(s) of reinforced fiber felt or reinforced fiber fabric disposed on at least one side of said core layer;

ii) applying polyurethane resin composition on said reinforced fiber felt layer(s) or reinforced fiber fabric layer(s);

iii) placing the part obtained from step ii) in a mold, laminating the part to obtain a three-dimensional shape, and curing said polyurethane resin composition; and

iv) demoulding to obtain said polyurethane laminated molding article,

wherein said polyurethane resin composition comprises:

A) an isocyanate component comprising one or more polyisocyanate(s);

B) an isocyanate reactive component comprising:

b1) a first polyol selected from polyols based on vegetable oil, or derivatives and modified products thereof, in a content of 5-50 wt.%, based on the weight of the isocyanate reactive component as 100 wt.%;

b2) a second polyol having an OH value of 300-700 mgKOH/g and a functionality of 2-6;

b3) one or more trimerization catalyst(s);

b4) an internal mold release agent in a content of 0.1-5 wt.%, based on the weight of the isocyanate reactive component as 100 wt.%.

In one embodiment of the invention, said first polyol is selected from polyols based on castor oil or soybean oil, or derivatives and modified products thereof.

In another embodiment of the invention, the isocyanate index of said polyurethane resin composition is 130-300.

In yet another embodiment of this invention, said trimerization catalyst is selected from amines or metal salts trimerization catalysts.

In still another embodiment of this invention, said core layer is selected from: thermoformable polyurethane foam, paper honeycomb, metal honeycomb, plastic honeycomb or combinations thereof.

In still another embodiment of this invention, said reinforced fiber felt or reinforced fiber fabric is prepared from glass fiber, nature fiber, carbon fiber, aramid fiber or combinations thereof.

**Detailed Description**

I. Polyurethane laminated molding article

On the one hand, this invention relates to a polyurethane laminated molding article, said polyurethane laminated molding article comprising a core layer and a reinforced fiber layer disposed on at least one side of said core layer, said reinforced fiber layer is formed by applying polyurethane resin composition on one or more layer(s) of reinforced fiber felt or reinforced fiber fabric and curing said polyurethane resin.

The polyurethane laminated molding article in this invention not only has good mechanical property but also has excellent demoulding property and a good operability.

When used in this invention, the term "polyurethane laminated molding article" has the well-known definition to persons skilled in the art. For example, both CN1321816C and CN101641384 describe this structure in detail.

The core layer of the polyurethane laminated molding article provided in this invention can be a common core layer in the art, including, but not limited to, thermoformable polyurethane foam, paper honeycomb, metal honeycomb, plastic honeycomb, or combinations thereof. In a preferred embodiment of the invention, said core layer is selected from paper honeycomb.

On one or both sides of said core layer, one or more layer(s) of reinforced fiber felt or reinforced fiber fabric are disposed. Said reinforced fiber felt or reinforced fiber fabric can be prepared from glass fiber, nature fiber, carbon fiber, aramid fiber, or combinations thereof. In a preferred embodiment of the invention, said reinforced fiber felt or reinforced fiber fabric is prepared from glass fiber.

After obtaining the above parts, a polyurethane composition can be applied on said reinforced fiber felt or reinforced fiber fabric, and the polyurethane composition will permeate the mesh structure of the reinforced fiber felt or fabric and then be cured in the mold under a certain temperature and mold pressure, forming a polyurethane-reinforced fiber composite structure, i.e., a polyurethane laminated molding article.

The polyurethane resin composition useful in the invention comprises:

A) an isocyanate component comprising one or more polyisocyanate(s);

B) an isocyanate reactive component comprising:

b1) a first polyol selected from polyols based on vegetable oil, or derivatives and modified products thereof, in a content of 5-50 wt.%, based on the weight of the isocyanate reactive component as 100 wt.%;

b2) a second polyol having an OH value of 300-700 mgKOH/g and a functionality of 2-6;

b3) one or more trimerization catalyst(s);

b4) an internal mold release agent in a content of 0.1-5 wt.%, based on the weight of the isocyanate reactive component as 100 wt.%.

The internal mold release agent in said polyurethane resin composition is in an amount smaller than that presently used for a polyurethane resin composition in the art, but the composition still has good demoulding time and properties.

The organic polyisocyanate useful in the component A) of said polyurethane composition comprises organic diisocyanate, which can be any aliphatic, alicyclic, or aromatic isocyanate that have been known to be useful in the preparation of polyurethane. The examples thereof include, but are not limited to, 2,2'-, 2,4-, and 4,4'-diphenyl methane diisocyanate; a mixture of monomer-type diphenyl methane diisocyanate and a diphenyl methane diisocyanate homologue having more rings (polymerized MDI); isophorone diisocyanate (IPDI) or an oligomer thereof; toluene diisocyanate (TDI), for example, a toluene diisocyanate isomer such as toluene-2,4- or 2,6-diisocyanate, or a mixture thereof; tetramethylene diisocyanate or an oligomer thereof; hexamethylene diisocyanate (HDI) or an oligomer thereof; naphthalene diisocyanate (NDI) or mixture thereof.

In the embodiments of the invention, the organic polyisocyanate comprises isocyanate based on diphenyl methane diisocyanate, in particular, those containing polymerized MDI. The organic polyisocyanate preferably has a functionality of 1.9 to 3.5, particularly preferably 2.0 to 2.8. The organic polyisocyanate preferably has a viscosity of 5 to 600 mPas, particularly preferably 10 to 300 mPas, measured according to DIN 53019-1-3 at 25°C. Said isocyanate component may be in a content of 40-80 wt.%, based on the total weight of the polyurethane composition as 100 wt.%.

The organic polyisocyanate can also be used in the form of a polyisocyanate prepolymer. These polyisocyanate prepolymers can be obtained by reacting an excess amount of the above organic polyisocyanate with a compound having at least two isocyanate reactive groups at, for example, 30 to 100°C, preferably about 80°C. The polyisocyanate prepolymer of the invention has a NCO content of preferably 20-33 wt.%, particularly preferably 25-32 wt.%. Persons skilled in the art know well the compounds having at least two isocyanate reactive groups, such as those described in "Plastic Handbook", Chapter 3.1 ("Kunststoff-handbuch, 7, Polyurethanes", Carl Hanser-Verlag, edition 3, 1993).

The first polyol component b1) useful in the invention is selected from polyols based on vegetable oil or derivatives and modified products thereof. When used in the invention, the polyols based on vegetable oil include vegetable oil, vegetable oil polyols, or the modified products and derivatives thereof. The vegetable oil is a compound prepared from unsaturated fatty acid and glycerol, or oil extracted from fruits, seeds, or plumules of plants, which is preferably but not limited to soybean oil and castor oil. Said vegetable oil polyol is a polyol initiated from one or more vegetable oils. The starting materials for synthesizing the vegetable oil polyol include, but are not limited to, soybean oil and castor oil. The starting materials of the vegetable oil polyol can introduce hydroxy via processes like cracking, oxidation, or transesterification and then the corresponding vegetable oil polyol is prepared via the processes for preparing organic polyols known well by persons skilled in the art. The polyols based on vegetable oil, or derivatives and modified products thereof, useful in the invention have a functionality of 1.9 to 6, preferably 2 to 4, and an OH value of 30 to 350 mgKOH/g, preferably 50 to 200 mgKOH/g. In some preferred embodiments of the invention, said first polyol component b1) is selected from castor oil, soybean oil, or the combinations thereof.

The second polyol useful in the invention has an OH value of 300 to 700 mgKOH/g, and a functionality of 2 to 6. In a preferred embodiment of the invention, said second polyol is selected from polyether polyol, which can be prepared according to the common methods in the art.

The trimerization catalyst useful in the invention has the well-known meaning to persons skilled in the art, i.e., it refers to a catalyst that can transform the isocyanate into a trimeric structure. In a preferred embodiment of the invention, said trimerization catalyst is selected from amines or metal salts trimerization catalysts. Examples of the trimerization catalyst useful in the invention include, but are not limited to, potassium acetate or potassium isooctanoate.

In an embodiment of the invention, the isocyanate index of said polyurethane composition is 130 to 300. A better demoulding property can be achieved by using this type of polyurethane composition.

When used in the invention, the isocyanate index X is defined as follows:

$$X = \frac{[\text{the molar number of the isocyanate group (NCO group) in the polyurethane composition}]}{[\text{the molar number of the isocyanate reactive group in the polyurethane composition}]}$$

The internal mold release agent useful in the invention can be those commonly used in the art. The examples thereof include, but are not limited to, reaction products of fatty acid ester and polyisocyanate, salts formed by fatty acid and amino-containing polysiloxane, salts formed by saturated and/or unsaturated (cyclic)aliphatic carboxylic acid having at least 8 carbon atoms and tertiary amine, in particular, an internal mold release agent prepared by esterification or amidation of the following substances, such as carboxylic ester and/or carboxamide: a mixture formed by montanic acid and at least one aliphatic carboxylic acid having at least 10 carbon atoms with at least bifunctional alkanolamide having a molecular weight of 60 to 400g/mol, polyols, and/or polyamines, as disclosed in EP153639; a mixture formed by organic amines, stearic acid, and the metal salts of organic monocarboxylic acid and/or dicarboxylic acid or their anhydrides, as disclosed in DE-A-3 607447; or a mixture formed by an imine compound, a metal salt of carboxylic acid, and, if suitable, a carboxylic acid, as disclosed in US4764537. In the invention, the internal mold release agent is used in an amount of 0.1-5 wt.%, preferably 0.1-3 wt.%, based on the weight of said isocyanate reactive group as 100 wt.%.

The above polyurethane composition may further comprise common aids in the art, including, but not limited to, thixotropic agents, fillers, antioxidants, dyes, pigments, fluorescent brighteners, and stabilizers for heat, light, and/or UV radiation, plasticizers, and surfactants.

The polyurethane laminated molding composition of the invention may further comprise a decoration layer disposed on the reinforced fiber layer or the core layer. Said decoration layer can be formed by being used in half-finished parts prior to mold closing, and then by mold closing lamination, so as to form one or more decoration layers on the surface of the molding composition. Said decoration layer(s) can also be disposed on the molding composition by means of adhesion after demoulding.

The polyurethane laminated molding articles provided in the invention can be automobile spare tire covers, luggage rack plates, skylight plates, or automobile floor and other automobile interiors.

II. Method for preparing a polyurethane laminated molding composition

On the other hand, the invention further provides a method for preparing a polyurethane laminated molding composition, comprising:

i) providing a part to be laminated comprising a core layer and one or more layer(s) of reinforced fiber felt or reinforced fiber fabric disposed on at least one side of said core layer;

ii) applying polyurethane resin composition on said reinforced fiber felt layer(s) or reinforced fiber fabric layer(s);

iii) placing the part obtained from step ii) in a mold, laminating the part to obtain a three-dimensional shape, and curing said polyurethane resin composition; and

iv) demoulding to obtain said polyurethane laminated molding article.

The method provided in the invention can reduce the frequency of using an external mold release agent, thus increasing the productivity, i.e., providing a better demoulding effect.

**Examples**

The raw materials and apparatuses mentioned in the text of the invention are described as follows:

NJ303: polyether polyol having an OH value of 475 mgKOH/g, purchased from Jurong Ningwu New Material Company;

DC380: polyether polyol having an OH value of 380 mgKOH/g, purchased from Dongchang Company;

4050E: polyether polyol having an OH value of 630 mgKOH/g, purchased from Covestro Polymers (China) Co., Ltd;

PU1748: modified amines aids, purchased from Covestro Polymers (China) Co., Ltd;

DETDA: 3,5-diethyltoluenediamine, purchased from Albemarle Corporation;

G71S: an internal mold release agent, purchased from Henkel AG;

B8870: silicone oil, purchased from Evonik;

Dabco K-15: a trimerization catalyst, purchased from Air Product Corporation;

PERMAUQRE® EX-GP-77-263: a pigment, purchased from ISL-Chemie Corporation;

Desmodur 44V20: polyisocyanate, purchased from Covestro Polymers (China) Co., Ltd.

Examples 1-3

The components in the Examples contained in Table 1, except for isocyanate, were mixed to mix with isocyanate via a high-pressure spray system and was sprayed on an "interlayer half-finished product." The so-called interlayer half-finished product was a honeycomb-shaped paperboard covered with glass fiber felt on both sides. The gram weight of the glass fiber felt used was 250 g/m$^2$. The spray amount of the polyurethane resin composition was 250 g/m$^2$. After finishing the spraying, a mechanical arm transported the sprayed product to a press for curing and molding at a mold temperature of 120°C. The selfdemoulding times of the product were tested on a mold coated with the same amount of external mold release agent. A polyurethane laminated molding article was obtained after demoulding. The time for demoulding was 90 seconds for all of them.

To measure the demoulding effects accurately, the mold was sprayed with the same gram of external mold release agent in each case. A puller was used for demoulding, and if the pulling force shown in the puller exceeded 100 N, the demoulding was defined as failed.

Table 1: polyurethane composition formulation and demoulding property thereof

| Examples | 1 (comparative) | 2 | 3 |
|---|---|---|---|
| NJ303 | 61.5 | 42.5 | 40 |
| DC380 | 8 | 9.5 | 9.5 |
| 4050E | 4 | 4 | 6 |
| glycerol | 6 | 9 | 9 |
| DETDA | 2 | 1.5 | 1.5 |
| PU1748 | 10 | 10.2 | 10.2 |
| G71S | 4 | 2 | 2 |
| castor oil | 0 | 19 | 17 |
| B8870 | 0.4 | 0.2 | 0.2 |
| Dabco K-15 | 0 | 0 | 0.25 |
| water | 0.3 | 0.3 | 0.3 |
| PERMAUQRE® EX-GP-77-263 | 3.8 | 1.8 | 4.05 |
| total | 100 | 100 | 100 |
| Desmodur 44V20 | 130 | 126 | 155 |
| isocyanate index | 110 | 110 | 140 |
| demoulding times | 5 | 5 | 6 |

The method used in the invention for measuring the demoulding times is a laboratory method which is different from the method used in the industries. Generally, if the demoulding times measured by the laboratory method are 5, accordingly, the demoulding times can be about 15 in actual industrial application; and if the demoulding times measured by the laboratory method are 6, the demoulding times can be about 20 in actual industrial application.

Upon comparing Example 1 (comparative) and Example 2, the castor oil is added to the formulation of Example 2, so in the condition of reducing the amount of internal mold release agent, Example 2 can reach the same demoulding times. Upon comparing Example 2 and Example 3, Example 3 used trimerization catalyst so the demoulding times are further improved and productivity is increased.

Example 2 is a reference example not according to the claimed invention.

## Claims

1. A polyurethane laminated molding article, said polyurethane laminated molding article comprising a core layer and a reinforced fiber layer disposed on at least one side of said core layer, said reinforced fiber layer is formed by applying polyurethane resin composition on one or more layer(s) of reinforced fiber felt or reinforced fiber fabric and curing said polyurethane resin, wherein said polyurethane resin composition comprises:

   A) an isocyanate component comprising one or more polyisocyanate(s); and
   B) an isocyanate reactive component comprising:

   b1) a first polyol selected from polyols based on vegetable oil, or derivatives and modified products thereof, in a content of 5-50 wt.%, based on the weight of the isocyanate reactive component as 100 wt.%;
   b2) a second polyol having an OH value of 300-700 mgKOH/g and a functionality of 2-6;
   b3) one or more trimerization catalyst(s); and
   b4) an internal mold release agent in a content of 0.1-5 wt.%, based on the weight of the isocyanate reactive component as 100 wt.%.

2. The polyurethane laminated molding article according to claim 1, wherein said first polyol is selected from polyols based on castor oil or soybean oil or derivatives and modified products thereof.

3. The polyurethane laminated molding article according to claim 1, wherein the isocyanate index of said polyurethane resin composition is 130-300.

4. The polyurethane laminated molding article according to claim 1, wherein said trimerization catalyst is selected from amines or metal salts trimerization catalysts.

5. The polyurethane laminated molding article according to claim 1, wherein said core layer is selected from: thermoformable polyurethane foam, paper honeycomb, metal honeycomb, plastic honeycomb, or combinations thereof.

6. The polyurethane laminated molding article according to claim 1, wherein said reinforced fiber felt or reinforced fiber fabric is prepared from glass fiber, nature fiber, carbon fiber, aramid fiber, or combinations thereof.

7. A method for preparing a polyurethane laminated molding article, comprising:

   i) providing a part to be laminated comprising a core layer and one or more layer(s) of reinforced fiber felt or reinforced fiber fabric disposed on at least one side of said core layer;
   ii) applying polyurethane resin composition on said reinforced fiber felt layer(s) or reinforced fiber fabric layer(s);
   iii) placing the part obtained from step ii) in a mold, laminating the part to obtain a three-dimensional shape, and curing said polyurethane resin composition; and
   iv) demoulding to obtain said polyurethane laminated molding article, wherein said polyurethane resin composition comprises:

   A) an isocyanate component comprising one or more polyisocyanate(s); and
   B) an isocyanate reactive component comprising:

   b1) a first polyol selected from polyols based on vegetable oil, or derivatives and modified products thereof, in a content of 5-50 wt.%, based on the weight of the isocyanate reactive component as 100 wt.%;

b2) a second polyol having an OH value of 300-700 mgKOH/g and a functionality of 2-6;

b3) one or more trimerization catalyst(s); and

b4) an internal mold release agent in a content of 0.1-5 wt.%, based on the weight of the isocyanate reactive component as 100 wt.%.

8. The method for preparing polyurethane laminated molding article according to claim 7, wherein said first polyol is selected from polyols based on castor oil or soybean oil or derivatives and modified products thereof.

9. The method for preparing polyurethane laminated molding article according to claim 7, wherein the isocyanate index of said polyurethane resin composition is 130-300.

10. The method for preparing polyurethane laminated molding article according to claim 7, wherein said trimerization catalyst is selected from amines or metal salts trimerization catalysts.

11. The method for preparing polyurethane laminated molding article according to claim 7, wherein said core layer is selected from: thermoformable polyurethane foam, paper honeycomb, metal honeycomb, plastic honeycomb, or combinations thereof.

12. The method for preparing polyurethane laminated molding article according to claim 7, wherein said reinforced fiber felt or reinforced fiber fabric is prepared from glass fiber, nature fiber, carbon fiber, aramid fiber, or combinations thereof.

**Patentansprüche**

1. Polyurethan-laminierter Formkörper, wobei der Polyurethan-laminierte Formkörper eine Kernschicht und eine Verstärkungsfaserschicht, die an wenigstens einer Seite der Kernschicht angeordnet ist, umfasst, wobei die Verstärkungsfaserschicht durch Aufbringen von Polyurethanharzzusammensetzung auf eine oder mehrere Schichten von Verstärkungsfaservlies oder Verstärkungsfasergewebe und Härten des Polyurethanharzes gebildet ist, wobei die Polyurethanharzzusammensetzung umfasst:

A) eine Isocyanatkomponente, umfassend ein oder mehrere Polyisocyanate; und

B) eine isocyanatreaktive Komponente, umfassend:

b1) ein erstes Polyol ausgewählt aus Polyolen auf der Basis von Pflanzenöl oder Derivaten und modifizierten Produkten davon in einem Gehalt von 5-50 Gew.-%, bezogen auf das Gewicht der isocyanatreaktiven Komponente als 100 Gew.-%;

b2) ein zweites Polyol mit einer OH-Zahl von 300-700 mg KOH/g und einer Funktionalität von 2-6;

b3) einen oder mehrere Trimerisierungskatalysatoren; und

b4) ein internes Formtrennmittel in einem Gehalt von 0,1-5 Gew.-%, bezogen auf das Gewicht der isocyanatreaktiven Komponente als 100 Gew.-%.

2. Polyurethan-laminierter Formkörper gemäß Anspruch 1, wobei das erste Polyol ausgewählt ist aus Polyolen auf der Basis von Rizinusöl oder Sojabohnenöl oder Derivaten und modifizierten Produkten davon.

3. Polyurethan-laminierter Formkörper gemäß Anspruch 1, wobei der Isocyanatindex der Polyurethanharzzusammensetzung 130-300 beträgt.

4. Polyurethan-laminierter Formkörper gemäß Anspruch 1, wobei der Trimerisierungskatalysator ausgewählt ist aus Aminen und Metallsalz-Trimerisierungskatalysatoren.

5. Polyurethan-laminierter Formkörper gemäß Anspruch 1, wobei die Kernschicht ausgewählt ist aus: warmformbarem Polyurethanschaumstoff, Papierwabenmaterial, Metallwabenmaterial, Kunststoffwabenmaterial und Kombinationen davon.

6. Polyurethan-laminierter Formkörper gemäß Anspruch 1, wobei das Verstärkungsfaservlies oder Verstärkungsfasergewebe aus Glasfasern, natürlichen Fasern, Kohlenstofffasern, Aramidfasern oder Kombinationen davon hergestellt ist.

7. Verfahren zur Herstellung eines Polyurethan-laminierten Formkörpers, umfassend:

i) Bereitstellen eines zu laminierenden Teils, das eine Kernschicht und eine oder mehrere Schichten von Verstärkungsfaservlies oder Verstärkungsfasergewebe, die auf wenigstens einer Seite der Kernschicht angeordnet sind, umfasst;
ii) Aufbringen von Polyurethanharzzusammensetzung auf die Verstärkungsfaservliesschicht(en) oder Verstärkungsfasergewebeschicht(en) ;
iii) Platzieren des bei Schritt ii) erhaltenen Teils in einem Formwerkzeug, Laminieren des Teils, um eine dreidimensionale Form zu erhalten, und Härten der Polyurethanharzzusammensetzung; und
iv) Entformen, um den Polyurethan-laminierten Formkörper zu erhalten, wobei die Polyurethanharzzusammensetzung umfasst:

A) eine Isocyanatkomponente, umfassend ein oder mehrere Polyisocyanate; und
B) eine isocyanatreaktive Komponente, umfassend:

b1) ein erstes Polyol ausgewählt aus Polyolen auf der Basis von Pflanzenöl oder Derivaten und modifizierten Produkten davon in einem Gehalt von 5-50 Gew.-%, bezogen auf das Gewicht der isocyanatreaktiven Komponente als 100 Gew.-%;
b2) ein zweites Polyol mit einer OH-Zahl von 300-700 mg KOH/g und einer Funktionalität von 2-6;
b3) einen oder mehrere Trimerisierungskatalysatoren; und
b4) ein internes Formtrennmittel in einem Gehalt von 0,1-5 Gew.-%, bezogen auf das Gewicht der isocyanatreaktiven Komponente als 100 Gew.-%.

8. Verfahren zur Herstellung eines Polyurethan-laminierten Formkörpers gemäß Anspruch 7, wobei das erste Polyol ausgewählt ist aus Polyolen auf der Basis von Rizinusöl oder Sojabohnenöl oder Derivaten und modifizierten Produkten davon.

9. Verfahren zur Herstellung eines Polyurethan-laminierten Formkörpers gemäß Anspruch 7, wobei der Isocyanatindex der Polyurethanharzzusammensetzung 130-300 beträgt.

10. Verfahren zur Herstellung eines Polyurethan-laminierten Formkörpers gemäß Anspruch 7, wobei der Trimerisierungskatalysator ausgewählt ist aus Aminen und Metallsalz-Trimerisierungskatalysatoren.

11. Verfahren zur Herstellung eines Polyurethan-laminierten Formkörpers gemäß Anspruch 7, wobei die Kernschicht ausgewählt ist aus: warmformbarem Polyurethanschaumstoff, Papierwabenmaterial, Metallwabenmaterial, Kunststoffwabenmaterial und Kombinationen davon.

12. Verfahren zur Herstellung eines Polyurethan-laminierten Formkörpers gemäß Anspruch 7, wobei das Verstärkungsfaservlies oder Verstärkungsfasergewebe aus Glasfasern, natürlichen Fasern, Kohlenstofffasern, Aramidfasern oder Kombinationen davon hergestellt ist.

## Revendications

1. Article de moulage stratifié en polyuréthane, ledit article de moulage stratifié en polyuréthane comprenant une couche centrale et une couche renforcée de fibres disposée sur au moins un côté de ladite couche centrale, ladite couche renforcée de fibres étant formée par application d'une composition de résine de polyuréthane sur une ou plusieurs couches de feutre renforcé de fibres ou de tissu renforcé de fibres et durcissement de ladite résine de polyuréthane, dans lequel ladite composition de résine de polyuréthane comprend :

A) un composant d'isocyanate comprenant un ou plusieurs polyisocyanates ; et
B) un composant réactif d'isocyanate comprenant :

b1) un premier polyol choisi parmi des polyols à base d'huile végétale, ou des dérivés et des produits modifiés de ceux-ci, à une teneur de 5 à 50 % en poids, sur la base du poids du composant réactif d'isocyanate étant 100 % en poids ;

b2) un deuxième polyol ayant un indice OH de 300 à 700 mg KOH/g et une fonctionnalité de 2 à 6 ;
b3) un ou plusieurs catalyseurs de trimérisation ; et
b4) un agent de démoulage interne à une teneur de 0,1 à 5 % en poids, sur la base du poids du composant réactif d'isocyanate étant 100 % en poids.

2.  Article de moulage stratifié en polyuréthane selon la revendication 1, dans lequel ledit premier polyol est choisi parmi des polyols à base d'huile de ricin ou d'huile de soja ou des dérivés et des produits modifiés de ceux-ci.

3.  Article de moulage stratifié en polyuréthane selon la revendication 1, dans lequel l'indice d'isocyanate de ladite composition de résine de polyuréthane est de 130 à 300.

4.  Article de moulage stratifié en polyuréthane selon la revendication 1, dans lequel ledit catalyseur de trimérisation est choisi parmi des catalyseurs de trimérisation à base d'amines ou de sels métalliques.

5.  Article de moulage stratifié en polyuréthane selon la revendication 1, dans lequel ladite couche centrale est choisie parmi : une mousse de polyuréthane thermoformable, un nid d'abeilles en papier, un nid d'abeilles en métal, un nid d'abeilles en plastique, ou des combinaisons de ceux-ci.

6.  Article de moulage stratifié en polyuréthane selon la revendication 1, dans lequel ledit feutre renforcé de fibres ou tissu renforcé de fibres est préparé à partir de fibre de verre, fibre naturelle, fibre de carbone, fibre d'aramide, ou des combinaisons de celles-ci.

7.  Procédé de préparation d'un article de moulage stratifié en polyuréthane, comprenant :

    i) la fourniture d'une pièce à stratifier comprenant une couche centrale et une ou plusieurs couches de feutre renforcé de fibres ou de tissu renforcé de fibres disposées sur au moins un côté de ladite couche centrale ;
    ii) l'application d'une composition de résine de polyuréthane sur lesdites une ou plusieurs couches de feutre renforcé de fibres ou une ou plusieurs couches de tissu renforcé de fibres ;
    iii) le placement de la pièce obtenue à partir de l'étape ii) dans un moule, la stratification de la pièce pour obtenir une forme tridimensionnelle, et le durcissement de ladite composition de résine de polyuréthane ; et
    iv) le démoulage pour obtenir ledit article de moulage stratifié en polyuréthane, dans lequel ladite composition de résine de polyuréthane comprend :

        A) un composant d'isocyanate comprenant un ou plusieurs polyisocyanates ; et
        B) un composant réactif d'isocyanate comprenant :

        b1) un premier polyol choisi parmi des polyols à base d'huile végétale, ou des dérivés et des produits modifiés de ceux-ci, à une teneur de 5 à 50 % en poids, sur la base du poids du composant réactif d'isocyanate étant 100 % en poids ;
        b2) un deuxième polyol ayant un indice OH de 300 à 700 mg KOH/g et une fonctionnalité de 2 à 6 ;
        b3) un ou plusieurs catalyseur(s) de trimérisation ; et
        b4) un agent de démoulage interne à une teneur de 0,1 à 5 % en poids, sur la base du poids du composant réactif d'isocyanate étant 100 % en poids.

8.  Procédé de préparation d'article de moulage stratifié en polyuréthane selon la revendication 7, dans lequel ledit premier polyol est choisi parmi des polyols à base d'huile de ricin ou d'huile de soja ou des dérivés et des produits modifiés de ceux-ci.

9.  Procédé de préparation d'article de moulage stratifié en polyuréthane selon la revendication 7, dans lequel l'indice d'isocyanate de ladite composition de résine de polyuréthane est de 130 à 300.

10. Procédé de préparation d'article de moulage stratifié en polyuréthane selon la revendication 7, dans lequel ledit catalyseur de trimérisation est choisi parmi des catalyseurs de trimérisation à base d'amines ou de sels métalliques.

11. Procédé de préparation d'article de moulage stratifié en polyuréthane selon la revendication 7, dans lequel ladite couche centrale est choisie parmi : une mousse de polyuréthane thermoformable, un nid d'abeilles en papier, un nid d'abeilles en métal, un nid d'abeilles en plastique, ou des combinaisons de ceux-ci.

12. Procédé de préparation d'article de moulage stratifié en polyuréthane selon la revendication 7, dans lequel ledit feutre renforcé de fibres ou tissu renforcé de fibres est préparé à partir de fibre de verre, fibre naturelle, fibre de carbone, fibre d'aramide, ou des combinaisons de celles-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012015583 A1
- CN 1321816 C
- CN 101641384

- EP 153639 A
- DE 3607447 A
- US 4764537 A

**Non-patent literature cited in the description**

- Kunststoff-handbuch, 7, Polyurethanes. Plastic Handbook. arl Hanser-Verlag, 1993